# EUROPÄISCHE PATENTSCHRIFT

(11) **EP 4 059 755 B1**
(45) Veröffentlichungstag und Bekanntmachung des Hinweises auf die Patenterteilung: **26.11.2025**
(21) Anmeldenummer: 22161575.0
(22) Anmeldetag: 11.03.2022
(51) Int. Cl.: B60K 7/00, B60K 17/04

(54) **ACHSANTRIEBSSYSTEM**
AXLE DRIVE SYSTEM
SYSTÈME D'ENTRAÎNEMENT D'ESSIEU

(30) Priorität: 15.03.2021 DE 102021106267
(43) Veröffentlichungstag der Anmeldung: 21.09.2022
(73) Patentinhaber: Trailer Dynamics GmbH, 52249 Eschweiler (DE)
(72) Erfinder: JABER, Abdullah, 52066 Aachen (DE); MAZYEK, Raid, 52222 Stolberg (DE); MUES, Helko, 52070 Aachen (DE); WILKE, Konstantin, 52068 Aachen (DE)
(74) Vertreter: Patentanwälte Olbricht Buchhold Keulertz

(56) Entgegenhaltungen:
- EP-A2- 1 101 644
- DE-A1- 102005 045 281
- DE-A1- 102016 004 367
- DE-A1- 102017 006 399
- DE-A1- 102017 006 403
- DE-A1- 3 707 700
- DE-T5- 112018 004 167
- US-A1- 2006 054 368

## Beschreibung

Die Erfindung betrifft ein Achsantriebssystem für Fahrzeuge mit einer Antriebswelle und einer an der Antriebswelle angeordneten Motor-Getriebe-Einheit.

Nach einer Güterverkehr-Studie der Allianz pro Schiene von 2019 werden in Deutschland rund 71% der Lebensmittel und Waren über Sattelzüge und Lastkraftwagen zum Endverbraucher transportiert. Diese werden zweckbedingt dieselmotorisch betrieben und belasten aufgrund eines relativ hohen Systemgewichts und einen damit einhergehenden hohen Kraftstoffverbrauch die Umwelt mit schädlichen Abgasen.

Ferner herrscht im modernen Güterverkehr ein hoher Preisdruck, der vor allem die Spediteure dazu zwingt, Kosten für den Betrieb ihrer Lkw- und Sattelzugflotte einzusparen und gleichzeitig die Flexibilität der Flotte zu erhöhen. Deshalb werden für den Güterverkehr in zunehmendem Maße kraftstoffsparende Lastkraftwagen eingesetzt, die gleichzeitig mit modernen Abgasreinigungssystemen ausgestattet sind. Leider werden die Fortschritte, die im Bereich der Effizienz von Lastkraftwagen mit Brennkraftmaschinen erzielt werden können, immer kleiner. Insbesondere die Effizienz von Sattelzugmaschinen ist bereits auf einem sehr hohen Niveau angelangt und es können in der Zukunft und auf Basis von Brennkraftmaschinen nur noch moderate Verbesserungen erzielt werden.

Ausgenommen davon sind Neuentwicklungen im Bereich der Elektromobilität für Sattelzugmaschinen, die jedoch aufgrund einer geringen Reichweite bisher im Fernverkehr noch nicht mit Nachdruck vorangetrieben wurden. Die bisherigen Bestrebungen in Sachen Elektromobilität beschränken sich außerdem weitgehend auf den Bereich von Sattelzugmaschinen und Solo LKW. Hingegen wurden effizienzsteigernde Modifikationen an den Sattelaufliegern, die unmittelbar an die Sattelzugmaschinen gekoppelt werden, bisher nicht wirklich in Betracht gezogen. Abgesehen von der im Schwerlastverkehr weit verbreiteten und bekannten Achslift-Methode, bei der eine von meistens drei mitgeführten Achsen angehoben wird, um den Rollwiderstand bei einer Leer- oder Teillastfahrt zu reduzieren, gibt es keinerlei Lösungen oder Lösungsvorschläge für Sattelauflieger die zu signifikanten Effizienzsteigerungen und deutlicher Reduktion der Emissionen führen. Ein Achsantriebssystem für Fahrzeuge gemäß dem Oberbegriff des Anspruchs 1 ist aus DE 11 2018 004167 T5 bekannt.

Die der Erfindung zugrundeliegende Aufgabe kann mithin darin gesehen werden, die Energieeffizienz von Sattelzügen, insbesondere von Sattelaufliegern, durch eine alternative Antriebstechnik signifikant zu steigern und diese dadurch preiswerter und umweltschonender zu betreiben. Das vorgeschlagene Achsantriebssystem kann z.B. im Sattelauflieger verbaut sein und soll in erster Linie die in der Sattelzugmaschine befindliche verbrennungsmotorische Hauptantriebseinheit unterstützen, sodass diese deutlich kleiner dimensioniert werden kann und/oder dessen Verbrauch reduziert werden kann. Gleichzeitig soll das Achsantriebssystem die konventionellen mechanischen Reibbremsen durch eine elektromechanische Bremsfunktion unterstützen, kostengünstig in der Fertigung sein und eine kompakte Bauweise aufweisen.

Hauptmerkmale der Erfindung sind im kennzeichnenden Teil von Anspruch 1 angegeben. Vorteilhafte Ausgestaltungen sind Gegenstand der Ansprüche 2 bis 15.

Die zugrundeliegende Aufgabe wird gelöst durch ein Achsantriebssystem für Fahrzeuge, mit einer Antriebswelle und einer an der Antriebswelle angeordneten Motor-Getriebe-Einheit, wobei die Motor-Getriebe-Einheit mindestens einen, insbesondere zwei Elektromotoren und mindestens ein inneres Untersetzungsgetriebe aufweist, wobei das innere Untersetzungsgetriebe Antriebs- und Abtriebsstufen umfasst, wobei die Elektromotoren an die Antriebsstufen und die Abtriebsstufen in einem Koppelbereich an die Antriebswelle gekoppelt sind, wobei jeweils ein äußeres Untersetzungsgetriebe an vom Koppelbereich abgewandten Enden der Antriebswelle angeordnet ist.

Das erfindungsgemäße Antriebssystem kann insbesondere in Fahrzeugen ohne eigenen Antrieb, wie Sattelaufliegern, aber auch zusätzlich zu einem Hauptantrieb in einem motorgetriebenen Fahrzeug, wie beispielsweise einem Reisebus, zum Einsatz kommen und eine nicht mit dem Hauptantrieb gekoppelte Achse antreiben. Dabei unterstützt es den Hauptantrieb in Fahrsituationen, in denen eine höhere Antriebsleistung gefordert wird, wie beispielsweise beim Beschleunigen und bei Bergfahrten.

Vorteilhaft hieran ist zum einen, dass durch die Nutzung von einem oder mehreren Elektromotoren lokal keine umweltbelastenden Abgase im Fahrbetrieb entstehen. Prinzipbedingt können Elektromotoren im Motorbetrieb und im Generatorbetrieb arbeiten, wobei sie typischerweise auch im Teillastbetrieb einen relativ hohen Wirkungsgrad aufweisen. Dabei wird der Motorbetrieb zu Antriebszwecken und der Generatorbetrieb in Verzögerungsphasen eingesetzt. Ein Energiespeicher, insbesondere ein Lithium-Ionen oder Lithium-Eisenphosphat-Hochvoltakkumulator, versorgt die Elektromotoren in Antriebsphasen mit Strom bzw. elektrischer Energie, wohingegen die im Generatorbetrieb erzeugte elektrische Energie in umgekehrter Richtung wieder in den Energiespeicher geleitet werden kann. Die Erfindung stellt damit ein Achsantriebssystem mit einer Energierückgewinnungsmöglichkeit bereit, das zumindest einen Teil der Bremsenergie wieder in den Antriebsstrang rekuperieren kann. Das führt zu einer erheblichen Effizienzsteigerung, weil durch die elektromechanische Bremsung deutlich weniger Bremsverluste entstehen und dementsprechend weniger Bremsenergie in Form von Wärme verloren geht. Zudem entstehen durch die elektromechanische Bremsung deutlich weniger Feinstaubemissionen und es stellt sich ein deutlich geringerer Bremsverschleiß ein. Zusätzlich weisen die Elektromotoren unterbrechungsfreie Drehmomentabgaben über den gesamten Geschwindigkeitsbereich auf, wodurch keine Anfahrsynchronisation oder schaltbare Übersetzungen notwendig sind.

Ferner zeichnet sich das erfindungsgemäße Achsantriebssystem durch eine besonders kompakte Bauweise aus. Aufgrund der äußeren Untersetzungsgetriebe, die zusätzlich zu dem oder den inneren Untersetzungsgetrieben an den Enden der Antriebswelle angeordnet sind, kann das oder die an die Elektromotoren gekoppelte innere Untersetzungsgetriebe kleiner dimensioniert werden und spart dadurch erheblichen Bauraum ein. Ferner kann das über die Antriebswelle übertragene Moment reduziert werden und die Antriebswelle somit aus herkömmlichem Material und in herkömmlicher Dimensionierung ausgebildet werden.

Außerdem kann das erfindungsgemäße Achsantriebssystem die gesamte Fahrdynamik bzw. den Fahrkomfort eines Sattelzuges oder ähnlichen Anhängerfahrzeugs verbessern und beispielsweise einem unkontrollierten Ausscheren des Sattelaufliegers aufgrund eines zu hohen Gierwinkels entgegenwirken. Das Achsantriebssystem setzt in so einem Fall über ein Steuerungssystem eine gezielte Drehmomentverteilung um.

Vorzugsweise ist die Antriebswelle mehrteilig ausgebildet, wobei die Antriebswelle mindestens zwei Kardangelenke aufweist. Die Teilung der Antriebswelle liegt im Kopplungsbereich, worüber die Abtriebsstufen des inneren Untersetzungsgetriebes direkt an die Antriebswelle gekoppelt sind. Dadurch kann das Achsantriebssystem sehr flexibel ausgelegt werden. Ferner sorgen die Kardangelenke für eine Entlastung der Antriebswelle hinsichtlich mechanischer Belastungen und Entkoppeln diese gleichzeitig von den ungefederten Massen. Insgesamt wirkt sich die mehrteilige Ausbildung vor allem positiv auf die Übertragung von Drehmomenten zwischen Motor-Getriebe-Einheit und Fahrbahn aus. Denkbar wären auch homokinetische Gelenke bzw. Gleichlaufgelenkwellen, wie sie in modernen PKW eingesetzt werden. Diese sind besonders kostengünstig und einfach zu Fertigen.

Nach einer bevorzugten Ausführungsform ist die Antriebswelle im Bereich der Enden durch Buchsenelemente geführt und drehbar gelagert, wobei die Buchsenelemente mit Flanschadapter aufweisen, wobei die Buchsenelemente näher zu den Abtriebsstufen des inneren Untersetzungsgetriebes angeordnet sind als die an den Enden der Antriebswelle angeordneten äußeren Untersetzungsgetriebe. Die Buchsenelemente können je nach Bedarf für eine passgenaue Radanbindung mit weiteren Adapter- bzw. Zwischenelementen erweitert werden und stellen gleichzeitig eine kostengünstige Lösung für eine mechanische Drehlagerung der Antriebswelle dar. Durch die definierte Anordnung der Buchsenelemente wird in einem ohnehin begrenzten Radfelgenbereich Bauraum eingespart, weil die an den Enden der Antriebswelle angeordneten, äußeren Untersetzungsgetriebe größer dimensioniert sind als die Buchsenelemente und aufgrund der definierten Anordnung in einen unbegrenzten Felgenaußenbereich "gedrängt" werden. Die Flanschadapter stellen dabei eine ausreichend sichere Radanbindungsmöglichkeit für die Buchsenelemente bereit.

Hierzu trägt insbesondere auch eine bevorzugte Anordnung bei, gemäß der zwischen den Buchsenelementen und den an den Enden der Antriebswelle angeordneten äußeren Untersetzungsgetriebe, Radnaben, Bremsen und/oder Adapterelemente angeordnet sind. Damit sind die an den Enden der Antriebswelle angeordneten äußeren Untersetzungsgetriebe die an der Antriebswelle am weitesten aussen angeordneten Aggregate.

Nach einer bevorzugten Ausführungsform ist neben den konventionellen mechanischen Reibbremsen und/oder der rekuperativen elektromechanischen Bremsung eine elektrodynamische Dauerbremsfunktion im Generatorbetrieb vorgesehen, wobei eine durch die elektrodynamische Dauerbremsfunktion erzeugte elektrische Energie insbesondere beim Erreichen eines vordefinierten Batterieladezustandes von beispielsweise 90 %, an einen Heizwiderstand geleitet und dort in thermische Energie umgewandelt wird. Aufgrund der elektrodynamischen Dauerbremsfunktion erübrigt sich eine zusätzliche hydrodynamische Dauerbremse, die typischerweise in Nutzfahrzeugen und Omnibussen eingesetzt wird. Das spart Kosten und Bauraum ein, weil die Motor-Getriebe-Einheit die Dauerbremsfunktion abbilden kann.

Als Material für die Heizwiderstände werden vorzugsweise spezielle Heizleiterlegierungen oder Widerstandslegierungen (DIN 17471) aus austenitischen CrFeNi-Legierungen oder ferritischen CrFeAl-Legierungen verwendet, die einen über weite Temperaturbereiche annähernd konstanten spezifischen elektrischen Widerstand besitzen, einen besonders hohen Schmelzpunkt haben (z. B. Wolfram für Glühwendeln bei Abwesenheit von Sauerstoff) oder resistent gegenüber Oxidation an Luftsauerstoff sind (z. B. Kanthal und Nickel-Eisen-Legierungen). Die hohe Temperaturbeständigkeit dieser Materialien beruht dabei auf der Ausbildung einer schützenden Oxidschicht auf der Oberfläche.

Vorzugsweise sind Funktionslenker unterhalb der Antriebswelle in Richtung einer Fahrzeuglängsachse geführt, wobei die Funktionslenker an den Buchsenelementen fixiert sind, wobei an Enden der Funktionslenker Befestigungselemente zum Verbinden mit einem Fahrzeugrahmen angeordnet sind. Die Funktionslenker stützen die Antriebswelle auf vorteilhafte Weise ab und verbinden diese über die Buchsenelemente mit einem Fahrzeugrahmen.

Von Vorteil ist ferner, dass die Enden der Funktionslenker gelenkig an den Befestigungselementen gelagert sind, wobei die Funktionslenker über Federbügel und zu den Federbügeln korrespondierende Tragelemente mit den Buchsenelementen verbunden sind. Die gelenkige Lagerung der Enden an den Befestigungselementen entlastet die Funktionslenker und bietet gleichzeitig einen Freiheitsgrad für die Federbewegung der Aufbaumasse. Das steigert wiederum die Bauteilsicherheit der Funktionslenker.

Eine weitere Ausgestaltung der Erfindung sieht vor, dass die Federbügel oberhalb der Buchsenelemente und die korrespondierenden Tragelemente unterhalb der Buchsenelemente angeordnet sind, wobei die Federbügel die Buchsenelemente zumindest teilweise umschließen und mit den Tragelementen verbunden sind. Durch diesen Aufbau entsteht eine sichere Verbindung zwischen Antriebswelle, Buchsenelemente und Funktionslenker, wobei die Federbügel bei Bedarf fester angezogen werden können.

Bevorzugterweise sind Dämpferelemente vorgesehen, wobei die Dämpferelemente mit den Befestigungselementen und den Tragelementen verbunden sind. Die Dämpferelemente lassen Schwingungen der gefederten Masse schneller abklingen und dämpfen die Schwingungen der ungefederten Masse. Das steigert die Sicherheit des Achsantriebssystems im Fahrbetrieb.

Vorzugsweise sind die an den Enden der Antriebswelle angeordneten äußeren Untersetzungsgetriebe als Planetengetriebe ausgebildet, wobei die Planetengetriebe mit Radfelgen verbindbar sind. Aufgrund ihrer prinzipbedingt zylindrisch und kompakt ausgebildeten Gehäuse, eignen sich Planetengetriebe besonders gut für eine Anordnung im Radfelgen- und Radnabenbereich. Dabei sind die Planetengetriebe in einem Außenbereich mit den Radfelgen, den Radnaben und den Flanschadaptern der Buchsenelemente verbunden. Ferner weisen Planetengetriebe im Vergleich zu anderen Getriebearten, wie beispielsweise Exzentergetriebe, eine geringere Unwucht auf und können hohe Drehmomente übertragen.

Bevorzugt sind die Planetengetriebe als feste Getriebe ausgebildet, wobei die Planetengetriebe eine feste Übersetzung, insbesondere eine feste Übersetzung zwischen 3 und 5, insbesondere von 4, aufweisen. Aufgrund der festen Übersetzungen können die Planetengetriebe trotz einer prinzipbedingt aufwendigen Bauweise, relativ klein dimensioniert werden und fallen somit kostengünstig aus. Die Baugröße fällt durch die feste Übersetzung insbesondere in axialer Richtung kleiner aus.

Aus konstruktiver und antriebstechnischer Sicht ist es besonders vorteilhaft, dass die Motor-Getriebe-Einheit mittig an der Antriebswelle angeordnet ist, wobei das innere Untersetzungsgetriebe zwei parallel angeordnete Antriebs- und Abtriebsstufen aufweist. Die mittige Anordnung der Motor-Getriebe-Einheit an der Antriebswelle sorgt für eine gleichmäßige Drehmomententwicklung und -übertragung. Durch die zwei parallel angeordneten Antriebs- und Abtriebsstufen des inneren Untersetzungsgetriebes können beide Räder unabhängig voneinander angetrieben werden. Das eröffnet wiederum die Möglichkeit einer kontrollierten Umverteilung der Antriebsmomente. Mithilfe dieser unabhängigen Drehmomentverteilung kann man ein Fahrzeug zusätzlich über die Räder lenken, indem man gezielt die Antriebsmomente links und rechts unterschiedlich verteilt. Insgesamt verbessert diese Maßnahme die gesamte Fahrdynamik und steigert den Fahrkomfort sowie die Fahrsicherheit wie sie heute bereits bei PKW gängige Praxis darstellt. Gleichzeitig entfällt dadurch die Notwendigkeit eines klassischen Differentialgetriebes, was wiederum Kosten und Bauraum einspart. Denkbar wäre aber auch ein Additionsgetriebe mit Differential und Visco-Kupplungen und/oder weiteren Getriebetypanordnungen sowie Elementkombinationen. Aufgrund der Anordnung von Additions- und Differentialgetriebe, lassen sich im Bedarfsfall höhere Drehmomente auf eines der Räder übertragen.

Vorzugsweise ist das innere Untersetzungsgetriebe zwischen den Elektromotoren angeordnet, wobei das innere Untersetzungsgetriebe die Elektromotoren mit der Antriebswelle verbindet. Durch diese Anordnung fällt die Antriebseinheit besonders kompakt aus. Die Antriebs- und Abtriebsstufen können ohne zwischengelagerte Wellen oder dergleichen, direkt an die Elektromotoren und an die Antriebswelle gekoppelt werden. Ferner können die Antriebs- und Abtriebsstufen dadurch in einem Gehäuse untergebracht werden.

Vorzugsweise weist das innere Untersetzungsgetriebe, feste und einstufige Getriebe, insbesondere einstufige Stirnradgetriebe, auf. Aufgrund einer direkten, rein mechanischen Übertragung, weisen Stirnradgetriebe einen hohen Wirkungsgrad auf und zeichnen sich gleichzeitig durch eine sehr einfache sowie robuste Bauweise aus. Es kommen wenige bewegte Teile zum Einsatz und die typischerweise außenverzahnten Stirnräder sind einfacher herzustellen als zum Beispiel Schnecken- oder Kegelräder.

Die Antriebs- und Abtriebsstufen des inneren Untersetzungsgetriebes weisen dabei vorzugsweise feste Übersetzungen, insbesondere feste Übersetzungen zwischen 4 und 6, insbesondere von 5,5, auf. Dadurch können die an den Enden der Antriebswelle angeordneten Planetengetriebe kleiner und mit einer niedrigeren Übersetzung ausgelegt werden. Typischerweise weisen Stirnradgetriebe ohnehin eine maximale Übersetzung von etwa 6 auf. Mit dem definierten Übersetzungsintervall von 4 bis 6 und/oder dem festen Übersetzungswert von 5,5, schöpft das Achsantriebssystem im Wesentlichen die maximale Tragfähigkeit einer Stirnradverzahnung aus.

Nach einer bevorzugten Ausführungsform weisen die Elektromotoren getriebeseitig offene Stirnseiten auf, wobei vom inneren Untersetzungsgetriebe abgewandte Stirnseiten der Elektromotoren mit Motorhalterungen versehen sind. Die Motorhalterungen dienen als Halterungselement und könnten dabei gleichzeitig das Innenleben der Elektromotoren vor Verschmutzungen und Feuchtigkeit schützen. Die offenen Stirnseiten gewährleisten eine unmittelbare Kopplungsmöglichkeit der Elektromotoren an die Antriebsstufen des inneren Untersetzungsgetriebes, wodurch die Motor-Getriebe-Einheit besonders kompakt wird. Ferner kann die Kühlung des inneren Untersetzungsgetriebes und der Elektromotoren auf einfache Art und Weise über dasselbe Medium erfolgen.

Vorzugsweise sind die Elektromotoren als Asynchronmotoren ausgebildet, wobei die Elektromotoren jeweils Leistungswerte im Bereich von 250 kW bis 350 kW, insbesondere im Bereich von 300 bis 320 kW, aufweisen. Asynchronmotoren sind wartungsarm und weisen eine lange Lebensdauer auf. Ferner weisen Asynchronmotoren automatisch die Eigenschaft einer MotorBremse auf, wenn die mechanische Drehzahl höher ist als die elektrische Drehfeldfrequenz. Dabei stellt sich eine Art "Dynamoeffekt" ein.

Bevorzugt weisen die Elektromotoren jeweils Drehmomente im Bereich von 550 Nm bis 650 Nm, insbesondere im Bereich von 600 bis 620 Nm, auf. Damit steht eine ausreichende Antriebskraft zur Verfügung, die zum einen eine signifikante Unterstützung eines Hauptantriebs darstellt, zum anderen aber auch noch sicher über die Reifen auf eine Fahrbahnoberfläche übertragen werden kann.

Nach einer weiteren bevorzugten Ausführungsform sind an Seiten der Motor-Getriebe-Einheit zwei Aufnahmeplatten vorgesehen, wobei die Aufnahmeplatten fest mit dem Fahrzeugrahmen verbindbar sind. Die direkte Lagerung der Motor-Getriebe-Einheit über Aufnahmeplatten auf Höhe des Fahrzeugrahmens verkürzt den Abstand zwischen Fahrzeugrahmen und Motor-Getriebe-Einheit, wodurch die mechanische Festigkeit verbessert und gleichzeitig Hebelwirkungen reduziert werden. Durch die Aufnahmeplatten kann die Motor-Getriebe-Einheit auf einfache Art und Weise am Fahrzeugrahmen gelagert werden. Dabei korrespondiert die Profilierung der Aufnahmeplatten auf vorteilhafte Art mit der Profilierung des Fahrzeugrahmens und vereinfacht die Fixierung.

Dementsprechend ist die Motor-Getriebe-Einheit an den Aufnahmeplatten fixiert. wobei die Aufnahmeplatten Dämpfer aufweisen. Dabei kommen Gummidämpfer zum Einsatz. Die Gummidämpfer stellen eine besonders kostengünstige und einfache Lagerungsmethode dar und Verbinden die Motor-Getriebe-Einheit mit den Aufnahmeplatten. Dabei dämpfen die Gummilager einen durch die Motor-Getriebe-Einheit im Betrieb erzeugten Vibrations- und Körperschall und entkoppeln somit die Motor-Getriebe-Einheit von den gefederten Massen.

Vorzugsweise erfolgt der Kontakt zwischen der Motor-Getriebe-Einheit und den Gummidämpfern in den Aufnahmeplatten im Wesentlichen über Linien- und/oder Punktkontakte. Das sorgt für eine gleichmäßige Entkopplung der Motor-Getriebe-Einheit von den gefederten Massen bzw. von der Aufbaumasse, wodurch Schwingungen deutlich besser ausgeglichen werden können.

Nach einer weiteren bevorzugten Ausführungsform ist parallel zur Motor-Getriebe-Einheit ein Querträger vorgesehen, der fest mit dem Fahrzeugrahmen verbindbar ist, wobei der Querträger an einer Unterseite ein mittig angeordnetes Stützelement aufweist, das in Richtung des inneren Untersetzungsgetriebes greift und daran fixiert ist. Das Stützelement dient dabei als Drehmomentstütze wodurch Differenzdrehmomente von An- und Abtrieb und dessen Einleitung in Getriebegehäuse oder Fahrzeugrahmen besser ausgeglichen werden können.

Weiter ist eine Achsbrücke vorgesehen, wobei die Achsbrücke parallel zur Antriebswelle angeordnet ist. Damit ergibt sich eine ausreichende Steifigkeit des Achsantriebssystems.

Nach einer vorteilhaften Ausführungsform der Erfindung weist die Achsbrücke einen Grundkörper und zwei an Längsenden angeordnete Endkörper auf, wobei die Achsbrücke von den Befestigungselementen abgewandte Enden der Funktionslenker verbindet. Die Achsbrücke dient dabei vorteilhaft als Verbindungs- und Abstützglied der Funktionslenker. Ferner bietet die Achsbrücke die Plattform für Federelemente und verstärkt die Achskonfiguration in Querrichtung.

Vorzugsweise ist der Grundkörper als ein rechteckiges Rohrprofil ausgebildet, wobei das rechteckige Rohrprofil ein innenliegendes Fachwerk aufweist. Das Rohrprofil und das innenliegende Fachwerk steigern die Steifigkeit und mechanische Festigkeit der Achsbrücke. Gleichzeitig wird das Gesamtgewicht des Achsantriebssystems reduziert. Denkbar sind auch weitere Rohrprofilformen die ein innenliegendes Fachwerk aufweisen. Maßgeblich für die Profilauswahl sind dabei in erster Linie der Fertigungsaufwand und die Herstellungskosten.

Dabei weist das Fachwerk vorzugsweise Quer- und/oder Längs- und/oder Diagonalstreben auf. Die Streben versteifen die Achsbrücke und steigern vor allem die mechanische Biegefestigkeit.

Nach einer bevorzugten Ausführungsform sind die Endkörper rechteckige Vollprofile und weisen Befestigungsöffnungen auf, wobei die Endkörper teilweise in die Rohrprofile des Grundkörpers eingeführt sind. Im Bereich der Endkörper sind die Gewichtslasten der Aufbaumasse bzw. der gefederten Massen zu erwarten. Durch das Vollprofil sind die Endkörper stärker ausgebildet und halten eine höhere mechanische Belastung aus. Das steigert insgesamt die Festigkeit der Achsbrücke, insbesondere im Bereich der Endkörper. Die Befestigungsöffnungen dienen dabei zur Aufnahme von geeigneten Befestigungselementen, um die Achsbrücke mit Federelementen und über diese mit dem Fahrzeugrahmen zu verbinden.

Vorzugsweise sind dabei Federelemente vorgesehen, die an einer Oberseite mit dem Fahrzeugrahmen verbunden sind, wobei die Federelemente an einer Unterseite mit den Enden der Funktionslenker und den Endkörpern der Achsbrücke verbunden sind. Durch die gestapelte Überlagerung des Fahrzeugrahmens, der Federelemente und den Enden der Funktionslenker im Bereich der Endkörper, die Vollprofile aufweisen, entsteht eine besonders sichere und mechanisch feste Fixierung. Dabei bilden die Endkörper geeignete Auflageflächen für die aufgezählten Komponenten, insbesondere für die Federelemente.

Nach einer besonders bevorzugten Ausführungsform weist die Achsbrücke eine Spurführungseinrichtung mit einem Wattmechanismus auf. Die Spurführungseinrichtung dient in erster Linie als Querführungselement und kann über den Wattmechanismus, der als eine Art Koppelgetriebe wirkt, Querkräfte und Seitenführungskräfte aufnehmen und ausgleichen. Die Spurführungseinrichtung sorgt für eine erzwungenermaßen geführte Spureinhaltung, verbessert die Fahrdynamik und steigert gleichzeitig den Fahrkomfort. Ferner gewährleistet die Spurführungseinrichtung, dass das Achsantriebssystem auf sichere Art und Weise zu Antriebszwecken verwendet werden kann und neben Bremsmomenten auch Antriebsmomente übertragen werden können.

Dabei weist der Wattmechanismus vorzugsweise mindestens zwei Quergestänge und ein Befestigungselement auf, wobei das Befestigungselement im Wesentlichen elliptisch ausgebildet ist. Die Quergestänge wandeln dabei rotatorische Schwenkbewegungen in der Ebene des elliptischen Befestigungselements in eine im Wesentlichen geradlinige Bewegung um. Die elliptische Ausbildung des Befestigungselements eignet sich besonders gut zur gelenkigen Aufnahme der Quergestänge.

Nach einer weiteren wichtigen Ausführungsform weist die Spurführungseinrichtung zwei senkrecht zur Achsbrücke angeordnete Halterungselemente auf, wobei die Halterungselemente mit dem Fahrzeugrahmen verbindbar sind. Die senkrecht zur Achsbrücke angeordneten Halterungselemente verbinden die Quergestänge mit dem Fahrzeugrahmen und dienen dabei gleichzeitig als verstärkendes Zwischenelement. Dadurch, dass die Halterungselemente senkrecht angeordnet sind, können die Quergestänge über eine Bolzenlagerung fixiert werden, ohne die gewünschte Bewegung des Wattmechanismus zu beeinflussen.

Dabei weisen die Halterungselemente vorzugsweise U-Profile auf, wobei die U-Profile an einer Ober- und Unterseite seitliche Öffnungen und Ausnehmungen aufweisen. Durch das U-Profil und den seitlichen Öffnungen und Ausnehmungen können die Quergestänge auf einfache Art und Weise durch eine gelenkige Lagerung an den Halterungselementen fixiert werden.

Bevorzugterweise sind die Halterungselemente identisch ausgebildet, wobei die Halterungselemente zumindest eine Versteifungsstrebe aufweisen. Durch die identische Ausbildung können die Quergestänge je nach Anforderung an der Ober- oder Unterseite gelagert werden. Ferner eröffnet sich dadurch die Möglichkeit, bei Bedarf zwei weitere Quergestänge zu verwenden, um größere Kräfte aufnehmen zu können.

Vorzugsweise sind die Quergestänge mit den Halterungselementen gelenkig verbunden, wobei das Befestigungselement mittig an der Achsbrücke angeordnet ist und an schmalen Enden gelenkig mit den Quergestängen verbunden ist. Durch diese Anordnung kann der Wattmechanismus gleichmäßig und mit einem relativ hohen Wirkungsgrad umgesetzt werden.

Dabei sind die Quergestänge vorzugsweise längenverstellbare Wattgestänge, wobei die Wattgestänge an Enden gegenläufige Feingewinde aufweisen. Durch die Längenvariabilität und den an den Enden angeordneten, gegenläufigen Feingewinde können die Wattgestänge in Querrichtung verlängert oder verkürzt werden ohne demontiert zu werden. Aufgrund der gegensinnig angeordneten Feingewinde an den Enden der Wattgestänge, kann auf einfache und schnelle Art eine Spureinstellung vorgenommen werden. Die gelenkigen Verbindungen der Quergestänge erfolgen dabei vorzugsweise über Kugelgelenkzapfen.

Vorzugsweise weist die Spurführungseinrichtung ein Verstärkungsprofil auf, das senkrecht an einer Oberseite der Achsbrücke angeordnet ist, wobei das Verstärkungsprofil zwei Querverstärker aufweist. Das Verstärkungsprofil versteift die Achsbrücke zusätzlich und steigert die mechanische Festigkeit der Spurführungseinrichtung. Die Formgebung und genaue Anordnungsrichtung der Verstärkungselemente des Verstärkungsprofils können dabei variieren. Maßgeblich für die Auswahl sind dabei in erster Linie der Fertigungsaufwand und die Herstellungskosten.

Nach einer bevorzugten Ausführungsform weisen die Querverstärker ein Anschlusselement auf, wobei das Anschlusselement senkrecht zur Antriebswelle angeordnet ist. Durch die senkrechte Anordnung zur Antriebswelle, kann das Anschlusselement in Richtung der Wattgestänge ragen und den Wattmechanismus unterstützen. Dabei dient das Anschlusselement als eine Art Lagerbolzen für das Befestigungselement.

Vorzugsweise ist das Anschlusselement im Wesentlichen zylindrisch ausgebildet. Das erleichtert die Umsetzung einer schwenkbaren bzw. drehbaren Lagerung des elliptischen Befestigungselementes.

Nach einer weiteren Ausführungsform ist das elliptische Befestigungselement zentriert und drehbar an dem Anschlusselement gelagert, wobei die schmalen Enden des Befestigungselements im Wesentlichen auf der gleichen Höhe mit den Quergestänge verbunden sind wie die Halterungselemente. Diese Anordnung sorgt für eine gleichmäßige Querführung und Kräfteeinleitung. Gleichzeitig werden die Halterungselemente, aufgrund der drehbaren Lagerung der Wattgestänge am Befestigungselement, mechanisch entlastet.

Nach einer bevorzugten Ausführungsform weisen die Halterungselemente einen Werkstoff mit einer hohen Zugfestigkeit, insbesondere den Werkstoff Baustahl S500, auf. Vor allem die Halterungselemente stehen unter extrem hohem mechanischen Spannungsbelastungen beim Betrieb der Spurführungseinrichtung. Aufgrund der hohen Zugfestigkeit können die Halterungselemente auch hohen Quer- und Seitenführungskräften standhalten. Dadurch wird die Bruchgefahr verringert und einem Durchbiegen entgegengewirkt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein erfindungsgemäßes Achsantriebssystem in ISO-Ansicht (3D);
- Fig. 2: das Achsantriebssystem in Vorderansicht;
- Fig. 3: das Achsantriebssystem in Draufsicht;
- Fig. 4: das Achsantriebssystem und ein Fahrzeugrahmen im befestigten Zustand in ISO-Ansicht (3D);
- Fig. 5: das Achsantriebssystem und den Fahrzeugrahmen im befestigten Zustand in einer Ansicht von unten;
- Fig. 6: das Achsantriebssystem und den Fahrzeugrahmen im befestigten Zustand in Seitenansicht;
- Fig. 7: eine erfindungsgemäße Achsbrücke in Seitenansicht, Draufsicht (Schnittzeichnung) und in ISO-Ansicht (3D);
- Fig. 8: ein erfindungsgemäßes Halterungselement in ISO-Ansicht (3D);
- Fig. 9: ein erfindungsgemäßes Buchsenelement mit Flanschadapter in ISO-Ansicht (3D);

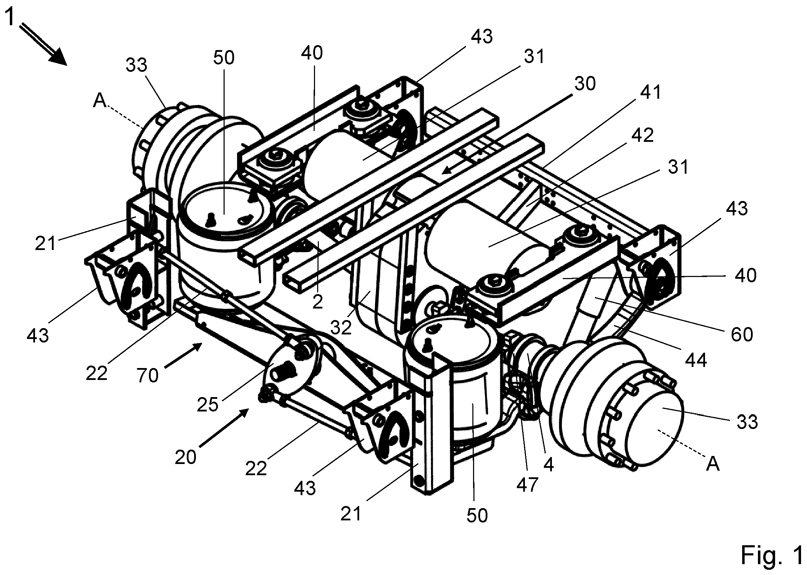

Fig. 1 zeigt ein Achsantriebssystem 1 für Fahrzeuge, mit einer Antriebswelle 2 und einer an der Antriebswelle 2 angeordneten Motor-Getriebe-Einheit 30. Wie man erkennt, ist die Antriebswelle 2 koaxial zu einer Antriebsachse A angeordnet, wobei die Motor-Getriebe-Einheit 30 zwei Elektromotoren 31 und ein inneres Untersetzungsgetriebe 32 aufweist. Das innere Untersetzungsgetriebe 32 umfasst in der gezeigten Ausführungsform zwei parallel angeordnete Antriebs- und Abtriebsstufen, wobei die Elektromotoren 31 an die Antriebsstufen und die Abtriebsstufen in einem Koppelbereich an die Antriebswelle 2 gekoppelt sind. Dabei sind die parallel angeordneten Antriebs- und Abtriebsstufen in einem gemeinsamen Gehäuse untergebracht.

Eine Zusammenschau aus Fig. 1 bis 3 verdeutlicht, dass die Motor-Getriebe-Einheit 30 im Wesentlichen mittig an der Antriebswelle 2 und das innere Untersetzungsgetriebe 32 zwischen den beiden Elektromotoren 31 angeordnet ist. Dabei verbindet das innere Untersetzungsgetriebe 32 die Elektromotoren 31 mit der Antriebswelle 2. Ferner ist an vom Koppelbereich abgewandten Enden der Antriebswelle 2 jeweils ein äußeres Untersetzungsgetriebe 33 angeordnet. Das innere Untersetzungsgetriebe 32 ist dabei als Stirnradgetriebe ausgebildet, wobei die an den Enden der Antriebswelle 2 angeordneten äußeren Untersetzungsgetriebe 33 als Planetengetriebe ausgebildet und mit nicht dargestellten Radfelgen verbunden sind. Bei den beiden Elektromotoren 31 handelt es sich im gezeigten Ausführungsbeispiel jeweils um Asynchronmaschinen.

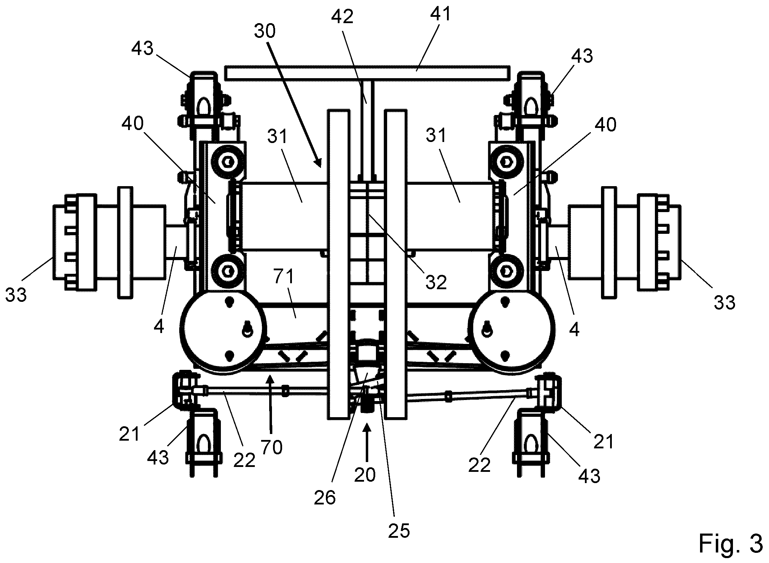

Die Antriebswelle 2 ist mehrteilig ausgebildet und weist zwei Kardangelenke auf. Wie vor allem in Fig. 3 erkennbar, ist die Antriebswelle 2 im Bereich der Enden durch Buchsenelemente 4 geführt und drehbar gelagert. Dabei weisen die Buchsenelemente 4 Flanschadapter 5 auf und sind näher zu den Abtriebsstufen des inneren Untersetzungsgetriebes 32 angeordnet als die an den Enden der Antriebswelle 2 angeordneten äußeren Untersetzungsgetriebe 33. Zwischen den Buchsenelementen 4 und den an den Enden der Antriebswelle 2 angeordneten äußeren Untersetzungsgetriebe 33 sind ferner Radnaben, Bremsen und Adapterelemente für die Radanbindung der Antriebswelle angeordnet.

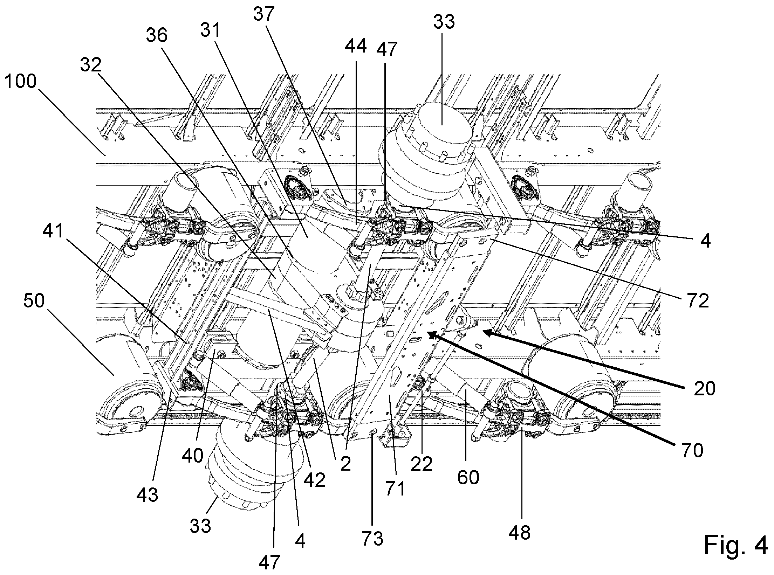

Aus Fig. 4 wird ersichtlich, dass die Elektromotoren 31 Getriebeseitig offene Stirnseiten 36 aufweisen, wobei vom inneren Untersetzungsgetriebe 32 abgewandte Stirnseiten der Elektromotoren 31 mit Motorhalterungen 37 versehen sind. Ferner sind Funktionslenker 44 unterhalb der Antriebswelle 2 in Richtung einer Fahrzeuglängsachse geführt. Die Funktionslenker 44 werden über Federbügel 47 und zu den Federbügeln 47 korrespondierende Tragelemente 48 an den Buchsenelementen 4 fixiert. Dabei sind an Enden der Funktionslenker 44 Befestigungselemente 43 zum Verbinden der Funktionslenker 44 mit einem Fahrzeugrahmen 100 angeordnet, wobei die Enden der Funktionslenker 44 gelenkig an den Befestigungselementen 43 gelagert sind. Im gezeigten Ausführungsbeispiel handelt es sich dabei um eine Bolzenlagerung.

Die Federbügel 47 sind oberhalb der Buchsenelemente 4 und die korrespondierenden Tragelemente 48 sind unterhalb der Buchsenelemente 4 angeordnet, wobei die Federbügel 47 die Buchsenelemente 4 teilweise umschließen und mit den Tragelementen 48 über anziehbare Fixierelemente verbunden sind. Des Weiteren sind Dämpferelemente 60 vorgesehen, die mit den Befestigungselementen 43 und den Tragelementen 48 verbunden sind.

An Seiten der Motor-Getriebe-Einheit 30 sind Aufnahmeplatten 40 vorgesehen (Fig. 1), die fest mit dem Fahrzeugrahmen 100 verbunden sind. Die Elektromotoren 31 sind an den Aufnahmeplatten 40, wobei die Aufnahmeplatten 40 Dämpfer aufweisen. Ferner ist parallel zur Motor-Getriebe-Einheit 30 ein Querträger 41 vorgesehen, der fest mit dem Fahrzeugrahmen 100 verbunden ist und an einer Unterseite ein mittig angeordnetes Stützelement 42 aufweist, das in Richtung des inneren Untersetzungsgetriebes 32 greift und daran fixiert ist (Fig. 1 - 4).

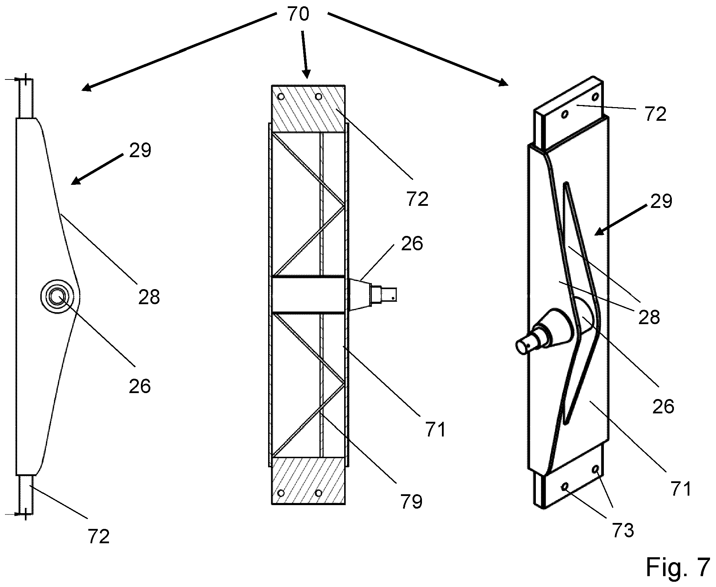

Aus Fig. 4 und 7 geht eine Achsbrücke 70 hervor, die parallel zur Antriebswelle 2 und zur Antriebsachse A angeordnet ist. Die Achsbrücke 70 weist einen Grundkörper 71 und zwei an Längsenden angeordnete Endkörper 72 auf. Die Achsbrücke 70 verbindet von den Befestigungselementen 43 abgewandte Enden der Funktionslenker 44 miteinander. Dabei ist der Grundkörper 71 ein rechteckiges Rohrprofil und weist ein innenliegendes Fachwerk 79 aus Längs- und Diagonalstreben auf. Die Endkörper 72 sind rechteckige Vollprofile und weisen Befestigungsöffnungen 73 auf, wobei die Endkörper 72 teilweise in die Rohrprofile des Grundkörpers 71 eingeführt sind.

Ferner sind Federelemente 50 vorgesehen, die an einer Oberseite mit dem Fahrzeugrahmen 100 verbunden sind und die Aufbaumasse abfedern. Die Federelemente 50 sind an einer Unterseite mit den Enden der Funktionslenker 44 und den Endkörpern 72 der Achsbrücke verbunden. Gemäß dem gezeigten Ausführungsbeispiel werden Luftbalgfedern als Federelemente 50 eingesetzt.

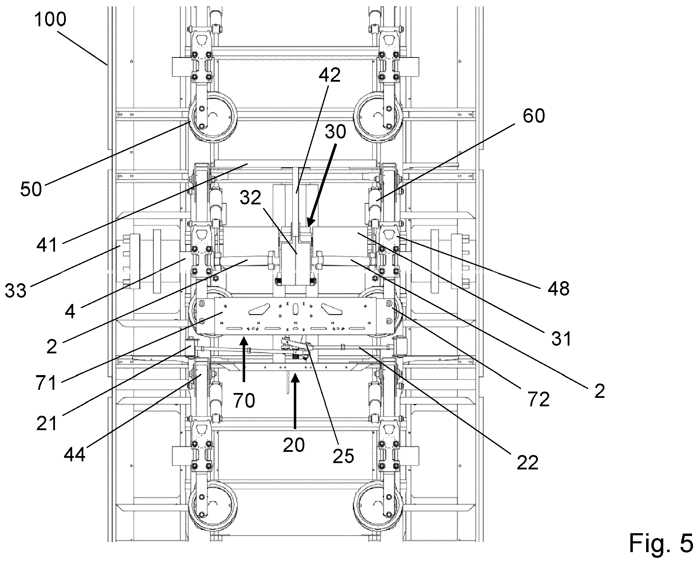

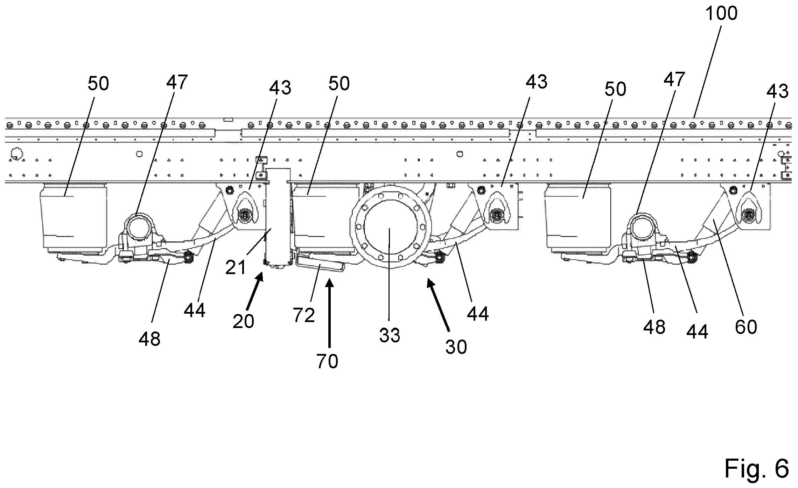

Fig. 5 und 6 zeigen den Fahrzeugrahmen 100 mit dem erfindungsgemäßen Achsantriebssystem 1 und zwei benachbarten, mitgeführten Starrachsen. Die mitgeführten Starrachsen weisen ebenfalls Befestigungselemente 43, Funktionslenker 44, Federelemente 50, Federbügel 47 und Tragelemente 48 auf. Dadurch kann das Achsantriebssystem 1 auch an der vorderen oder hinteren Achskonfiguration adaptiert werden.

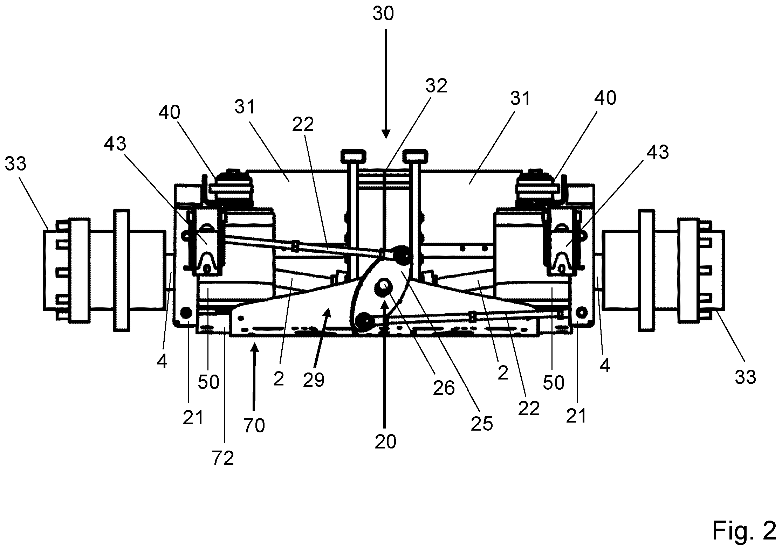

Eine Zusammenschau aus den Fig. 2, 3 und 5 zeigt, dass die Achsbrücke 70 eine Spurführungseinrichtung 20 mit einem Wattmechanismus aufweist. Dazu sind zwei Quergestänge 22 und ein Befestigungselement 25 vorgesehen, wobei das Befestigungselement 25 im Wesentlichen elliptisch ausgebildet ist und die Quergestänge 22 insbesondere längenverstellbare Wattgestänge mit Feingewinde sind. Die Spurführungseinrichtung 20 weist ein Verstärkungsprofil 29 auf, das senkrecht an einer Oberseite der Achsbrücke 70 angeordnet ist, wobei das Verstärkungsprofil 29 zwei Querverstärker 28 aufweist. Dabei ist an den Querverstärkern 28 ein Anschlusselement 26 angeordnet, wobei das Anschlusselement 26 senkrecht zur Antriebswelle 2 angeordnet ist und die Querverstärker 28 durchragt. Wie man am gezeigten Ausführungsbeispiel erkennt, ist das Anschlusselement 26 im Wesentlichen zylindrisch ausgebildet.

Die Fig. 1, 2, 3, 5 und 6 zeigen, dass die Spurführungseinrichtung 20 zwei senkrecht zur Achsbrücke 70 angeordnete Halterungselemente 21 aufweist, wobei die Halterungselemente 21 mit dem Fahrzeugrahmen 100 verbunden sind. Die Quergestänge 22 sind gelenkig mit den Halterungselementen 21 verbunden und das Befestigungselement 25 ist mittig an der Achsbrücke 70 angeordnet. Die Quergestänge 22 sind gleichzeitig an schmalen Enden des Befestigungselements 25 gelenkig gelagert. Das elliptische Befestigungselement 25 ist dabei zentriert und drehbar an dem Anschlusselement 26 gelagert, wobei die schmalen Enden des Befestigungselements 25 im Wesentlichen auf der gleichen Höhe mit den Quergestänge 22 verbunden sind wie die Halterungselemente 21.

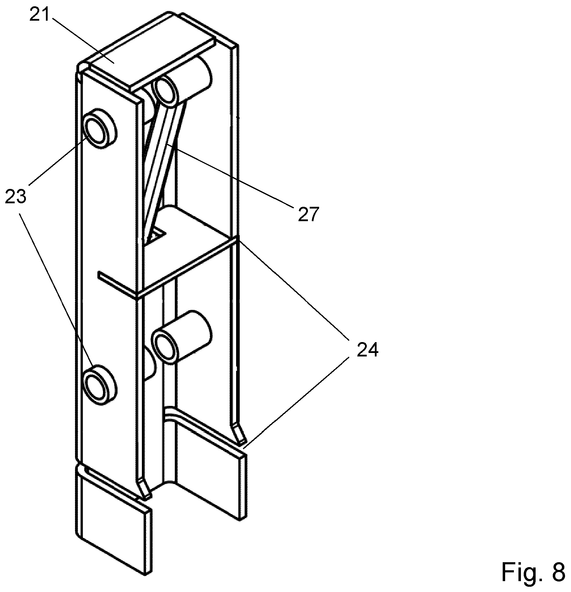

Die Halterungselemente 21 sind in Fig. 8 näher gezeigt. Die Halterungselemente 21 weisen U-Profile auf, wobei die U-Profile an einer Ober- und Unterseite seitliche Öffnungen 23 und Ausnehmungen 24 aufweisen. Gemäß dem gezeigten Ausführungsbeispiel werden die Quergestänge 22 über Bolzen in den Öffnungen 23 gelagert. In die Ausnehmungen 24 kann eine korrespondierende Stelle des Fahrzeugrahmens 100 eingeführt werden. Alternativ kann, wie in Fig. 8 dargestellt, eine separate Verstärkungsplatte in die Ausnehmung 24 eingesetzt werden.

Die Halterungselemente 21 sind identisch ausgebildet, wobei die Halterungselemente 21 zumindest eine Versteifungsstrebe 27 aufweisen. Die Versteifungsstrebe 27 liegt dabei diagonal innerhalb des U-Profils.

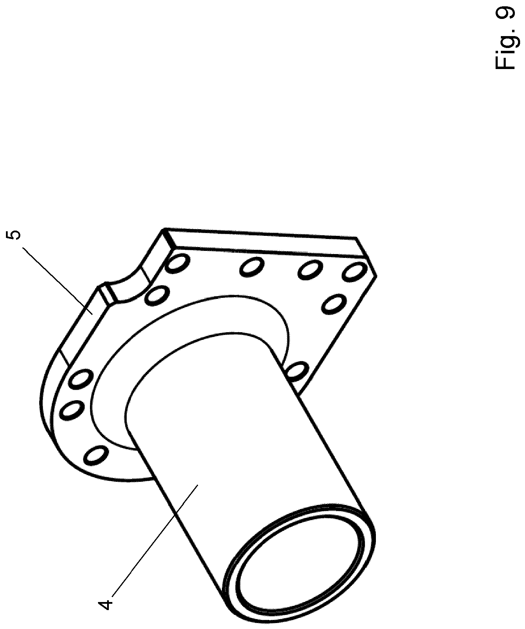

Das erfindungsgemäße Buchsenelement 4 wird in Fig. 9 näher beleuchtet. Wie man erkennt, weist das Buchsenelement 4 ein Flanschadapter 5 auf. Dabei ist der Flanschadapter 5 insbesondere an einer vom Koppelbereich abgewandten Stirnseite des Buchsenelementes 4 angeordnet. Das Buchsenelement 4 ist flanschadapterseitig an die weiteren vorgesehenen Radanbindungselemente und gleichzeitig an das äußere Untersetzungsgetriebe 33 fixiert (Fig. 1 - 3).

Das erfindungsgemäße Achsantriebssystem kann allgemein zu Antriebszwecken bei Fahrzeugen verwendet werden. Insbesondere ist das Achsantriebssystem für Sattelauflieger von Sattelzügen vorgesehen.

**Bezugszeichenliste**

| | | | |
|---|---|---|---|
| A | Antriebsachse | 50 | Federelement |
| 1 | Achsantriebssystem | 60 | Dämpferelement |
| 2 | Antriebswelle | | |
| 4 | Buchsenelemente | 70 | Achsbrücke |
| 5 | Flanschadapter | 71 | Grundkörper |
| | | 72 | Endkörper |
| | | 73 | Befestigungsöffnungen |
| 20 | Spurführungseinrichtung | 79 | Fachwerk |
| 21 | Halterungselemente | | |
| 22 | Quergestänge | 100 | Fahrzeugrahmen |
| 23 | Seitliche Öffnungen | | |
| 24 | Ausnehmungen | | |
| 25 | Befestigungselement (Achskreuz) | | |
| 26 | Anschlusselement | | |
| 27 | Versteifungsstrebe | | |
| 28 | Querverstärker | | |
| 29 | Verstärkungsprofil | | |
| 30 | Motor-Getriebe-Einheit | | |
| 31 | Elektromotoren | | |
| 32 | Inneres Untersetzungsgetriebe | | |
| 33 | Äußere Untersetzungsgetriebe | | |
| 36 | Offene Stirnseiten | | |
| 37 | Motorhalter | | |
| 40 | Aufnahmeplatten | | |
| 41 | Querträger | | |
| 42 | Stützelement | | |
| 43 | Befestigungselemente | | |
| 44 | Funktionslenker | | |
| 47 | Federbügel | | |
| 48 | Tragelemente | | |

## Patentansprüche

1. Achsantriebssystem (1) für Fahrzeuge, mit einer Antriebswelle (2) und einer an der Antriebswelle (2) angeordneten Motor-Getriebe-Einheit (30), wobei die Motor-Getriebe-Einheit (30) mindestens einen, insbesondere zwei Elektromotoren (31) und mindestens ein inneres Untersetzungsgetriebe (32) aufweist, wobei das innere Untersetzungsgetriebe (32) Antriebs- und Abtriebsstufen umfasst, wobei die Elektromotoren (31) an die Antriebsstufen und die Abtriebsstufen in einem Koppelbereich an die Antriebswelle (2) gekoppelt sind, wobei jeweils ein äußeres Untersetzungsgetriebe (33) an vom Koppelbereich abgewandten Enden der Antriebswelle (2) angeordnet ist, **dadurch gekennzeichnet, dass** vom inneren Untersetzungsgetriebe (32) abgewandte Stirnseiten der Elektromotoren (31) mit Motorhalterungen (37) versehen sind, wobei an den vom Untersetzungsgetriebe (32) abgewandten Stirnseiten der Elektromotoren (31) zwei Aufnahmeplatten (40) vorgesehen sind, wobei die Aufnahmeplatten (40) fest mit einem Fahrzeugrahmen (100) verbunden sind, wobei die Elektromotoren (31) an den Aufnahmeplatten (40) fixiert sind. und wobei die Aufnahmeplatten (40) Dämpfer aufweisen.

2. Achsantriebssystem nach Anspruch 1, **dadurch gekennzeichnet, dass** die Antriebswelle (2) mehrteilig ausgebildet ist, wobei die Antriebswelle (2) mindestens zwei Kardangelenke aufweist.

3. Achsantriebssystem nach Anspruch 1 oder 2, **dadurch gekennzeichnet, dass** die Antriebswelle (2) im Bereich der Enden durch Buchsenelemente (4) geführt und drehbar gelagert ist, wobei die Buchsenelemente (4) Flanschadapter (5) aufweisen, wobei die Buchsenelemente (4) näher zu den Abtriebsstufen des inneren Untersetzungsgetriebes (32) angeordnet sind als die an den Enden der Antriebswelle (2) angeordneten äußeren Untersetzungsgetriebe (33).

4. Achsantriebssystem nach Anspruch 3, **dadurch gekennzeichnet, dass** Funktionslenker (44) unterhalb der Antriebswelle (2) in Richtung einer Fahrzeuglängsachse geführt sind, wobei die Funktionslenker (44) an den Buchsenelementen (4) fixiert sind, wobei an Enden der Funktionslenker (44), Befestigungselemente (43), zum Verbinden mit dem Fahrzeugrahmen (100) angeordnet sind.

5. Achsantriebssystem nach einem der vorhergehenden Ansprüche, **dadurch gekennzeichnet, dass** die an den Enden der Antriebswelle (2) angeordneten äußeren Untersetzungsgetriebe (33) als Planetengetriebe ausgebildet sind, wobei die Planetengetriebe mit Radfelgen verbindbar sind.

6. Achsantriebssystem nach einem der vorhergehenden Ansprüche, **dadurch gekennzeichnet, dass** die Motor-Getriebe-Einheit (30) mittig an der Antriebswelle (2) angeordnet ist, wobei das innere Untersetzungsgetriebe (32) zwei parallel angeordnete Antriebs- und Abtriebsstufen aufweist.

7. Achsantriebssystem nach einem der vorhergehenden Ansprüche, **dadurch gekennzeichnet, dass** das innere Untersetzungsgetriebe (32) zwischen den Elektromotoren (31) angeordnet ist, wobei das innere Untersetzungsgetriebe (32) die Elektromotoren (31) mit der Antriebswelle (2) verbindet.

8. Achsantriebssystem nach einem der vorhergehenden Ansprüche, **dadurch gekennzeichnet, dass** die Elektromotoren (31) getriebeseitig offene Stirnseiten (36) aufweisen.

9. Achsantriebssystem nach einem der vorhergehenden Ansprüche, **dadurch gekennzeichnet, dass** eine Achsbrücke (70) vorgesehen ist, wobei die Achsbrücke (70) parallel zur Antriebswelle (2) angeordnet ist.

10. Achsantriebssystem nach Anspruch 10, **dadurch gekennzeichnet, dass** die Achsbrücke (70) einen Grundkörper (71) und zwei an Längsenden angeordnete Endkörper (72) aufweist, wobei die Achsbrücke (70) von den Befestigungselementen (43) abgewandte Enden der Funktionslenker (44) verbindet.

11. Achsantriebssystem nach Anspruch 10 oder 11, **dadurch gekennzeichnet, dass** der Grundkörper (71) als ein rechteckiges Rohrprofil ausgebildet ist, wobei das rechteckige Rohrprofil ein innenliegendes Fachwerk (79) aufweist.

12. Achsantriebssystem nach einem der Ansprüche 10 bis 12, **dadurch gekennzeichnet, dass** die Achsbrücke (70) eine Spurführungseinrichtung (20) mit einem Wattmechanismus aufweist.

13. Achsantriebssystem nach Anspruch 13, **dadurch gekennzeichnet, dass** die Spurführungseinrichtung (20) zwei senkrecht zur Achsbrücke (70) angeordnete Halterungselemente (21) aufweist, wobei die Halterungselemente (21) mit dem Fahrzeugrahmen (100) verbindbar sind.

14. Achsantriebssystem nach Anspruch 13 oder 14, **dadurch gekennzeichnet, dass** die Spurführungseinrichtung (20) ein Verstärkungsprofil (29) aufweist, das senkrecht an einer Oberseite der Achsbrücke (70) angeordnet ist, wobei das Verstärkungsprofil (29) zwei Querverstärker (28) aufweist.

15. Achsantriebssystem nach Anspruch 15 , **dadurch gekennzeichnet, dass** die Querverstärker (28) ein Anschlusselement (26) aufweisen, wobei das Anschlusselement (26) im Wesentlichen senkrecht zur Antriebswelle (2) angeordnet ist.

## Claims

1. Axle drive system (1) for vehicles, having a drive shaft (2) and a motor-gear unit (30) arranged on the drive shaft (2), wherein the motor-gear unit (30) comprising at least one, in particular two, electric motors (31) and at least one inner reduction gear (32), wherein the inner reduction gear (32) comprises input and output stages, wherein the electric motors (31) are coupled to the input stages and the output stages are coupled to the drive shaft (2) in a coupling region, wherein in each case an outer reduction gear (33) is arranged at ends of the drive shaft (2) remote from the coupling region, **characterized in that** end faces of the electric motors (31) facing away from the inner reduction gear (32) are provided with motor mounts (37), wherein two mounting plates (40) are provided at the end faces of the electric motors (31) facing away from the inner reduction gear (32), wherein the mounting plates (40) are fixedly connected to a vehicle frame (100), wherein the electric motors (31) are fixed to the mounting plates (40) and wherein the mounting plates (40) have dampers.

2. Axle drive system according to Claim 1, **characterized in that** the drive shaft (2) is of multipart construction, wherein the drive shaft (2) has at least two Cardan joints.

3. Axle drive system according to Claim 1 or 2, **characterized in that** the drive shaft (2) is guided and rotatably mounted in the region of its ends by bushing elements (4), wherein the bushing elements (4) have flange adapters (5), wherein the bushing elements (4) are arranged closer to the output stages of the inner reduction gear (32) than the outer reduction gears (33) arranged at the ends of the drive shaft (2).

4. Axle drive system according to Claim 3, **characterized in that** functional links (44) are guided beneath the drive shaft (2) in the direction of a vehicle longitudinal axis, wherein the functional links (44) are fixed to the bushing elements (4), wherein fastening elements (43) are arranged at the ends of the functional links (44) for connection to the vehicle frame (100).

5. Axle drive system according to any one of the preceding claims, **characterized in that** the outer reduction gears (33) arranged at the ends of the drive shaft (2) are designed as planetary gears, wherein the planetary gears are connectable to wheel rims.

6. Axle drive system according to any one of the preceding claims, **characterized in that** the motor-gear unit (30) is arranged centrally on the drive shaft (2), wherein the inner reduction gear (32) has two input and output stages arranged in parallel.

7. Axle drive system according to any one of the preceding claims, **characterized in that** the inner reduction gear (32) is arranged between the electric motors (31), wherein the inner reduction gear (32) connects the electric motors (31) to the drive shaft (2).

8. Axle drive system according to any one of the preceding claims, **characterized in that** the electric motors (31) have gear-side open end faces (36).

9. Axle drive system according to any one of the preceding claims, **characterized in that** an axle bridge (70) is provided, wherein the axle bridge (70) is arranged parallel to the drive shaft (2).

10. Axle drive system according to Claim 10, **characterized in that** the axle bridge (70) has a base body (71) and two end bodies (72) arranged at longitudinal ends, wherein the axle bridge (70) connects the ends of the functional links (44) remote from the fastening elements (43).

11. Axle drive system according to Claim 10 or 11, **characterized in that** the base body (71) is formed as a rectangular tubular profile, wherein the rectangular tubular profile has an internal lattice (79).

12. Axle drive system according to any one of Claims 10 to 12, **characterized in that** the axle bridge (70) has a track-guidance device (20) with a Watt mechanism.

13. Axle drive system according to Claim 12, **characterized in that** the track-guidance device (20) has two mounting elements (21) arranged perpendicular to the axle bridge (70), wherein the mounting elements (21) are connectable to the vehicle frame (100).

14. Axle drive system according to Claim 13 or 14, **characterized in that** the track-guidance device (20) has a reinforcement profile (29) arranged perpendicularly on an upper side of the axle bridge (70), wherein the reinforcement profile (29) has two transverse reinforcers (28).

15. Axle drive system according to Claim 15, **characterized in that** the transverse reinforcers (28) have a connection element (26), wherein the connection element (26) is arranged substantially perpendicular to the drive shaft (2).

## Revendications

1. Système d'entraînement d'essieu (1) pour véhicules, comprenant un arbre d'entraînement (2) et une unité moteur-transmission (30) disposée sur l'arbre d'entraînement (2), l'unité moteur-transmission (30) possédant au moins un, notamment deux moteurs électriques (31) et au moins un engrenage réducteur interne (32), l'engrenage réducteur interne (32) comprenant des étages d'entraînement et de sortie, les moteurs électriques (31) étant couplés aux étages d'entraînement et les étages de sortie à l'arbre d'entraînement (2) dans une zone de couplage, un engrenage réducteur externe (33) étant respectivement disposé aux extrémités de l'arbre d'entraînement (2) opposées à la zone de couplage, **caractérisé en ce que** les côtés frontaux des moteurs électriques (31) à l'opposé de l'engrenage réducteur interne (32) sont pourvus de fixations de moteur (37), deux plaques de réception (40) étant prévues au niveau des côtés frontaux des moteurs électriques (31) à l'opposé de l'engrenage réducteur (32), les plaques de réception (40) étant reliées à demeure à un châssis de véhicule (100), les moteurs électriques (31) étant calés au niveau des plaques de réception (40) et les plaques de réception (40) possédant des amortisseurs.

2. Système d'entraînement d'essieu selon la revendication 1, **caractérisé en ce que** l'arbre d'entraînement (2) est configuré en plusieurs parties, l'arbre d'entraînement (2) possédant au moins deux joints de Cardan.

3. Système d'entraînement d'essieu selon la revendication 1 ou 2, **caractérisé en ce que** l'arbre d'entraînement (2) est guidé dans la zone des extrémités par des éléments de douille (4) et est monté de manière rotative, les éléments de douille (4) possédant des adaptateurs à bride (5), les éléments à douille (4) étant disposés plus près des étages de sortie de l'engrenage réducteur interne (32) que les engrenages réducteurs externes (33) disposés aux extrémités de l'arbre d'entraînement (2).

4. Système d'entraînement d'essieu selon la revendication 3, **caractérisé en ce que** des bras oscillants fonctionnels (44) sont guidés au-dessous de l'arbre d'entraînement (2) dans la direction d'un axe longitudinal de véhicule, les bras oscillants fonctionnels (44) étant calés au niveau des éléments de douille (4), des éléments de fixation (43) destinés à la liaison avec le châssis de véhicule (100) étant disposés aux extrémités des bras oscillants fonctionnels (44).

5. Système d'entraînement d'essieu selon l'une des revendications précédentes, **caractérisé en ce que** les engrenages réducteurs externes (33) disposés aux extrémités de l'arbre d'entraînement (2) sont réalisés sous la forme d'engrenages planétaires, les engrenages planétaires pouvant être reliés à des jantes de roue.

6. Système d'entraînement d'essieu selon l'une des revendications précédentes, **caractérisé en ce que** l'unité moteur-transmission (30) est disposée au centre de l'arbre d'entraînement (2), l'engrenage réducteur interne (32) possédant deux étages d'entraînement et de sortie disposés en parallèle.

7. Système d'entraînement d'essieu selon l'une des revendications précédentes, **caractérisé en ce que** l'engrenage réducteur interne (32) est disposé entre les moteurs électriques (31), l'engrenage réducteur interne (32) reliant les moteurs électriques (31) à l'arbre d'entraînement (2).

8. Système d'entraînement d'essieu selon l'une des revendications précédentes, **caractérisé en ce que** les moteurs électriques (31) présentent des côtés frontaux (36) ouverts côté transmission.

9. Système d'entraînement d'essieu selon l'une des revendications précédentes, **caractérisé en ce qu'**un pont d'essieu (70) est prévu, le pont d'essieu (70) étant disposé parallèlement à l'arbre d'entraînement (2).

10. Système d'entraînement d'essieu selon la revendication 10, **caractérisé en ce que** le pont d'essieu (70) possède un corps de base (71) et deux corps d'extrémité (72) disposés aux extrémités longitudinales, le pont d'essieu (70) reliant les extrémités des bras oscillants fonctionnels (44) à l'opposé des éléments de fixation (43).

11. Système d'entraînement d'essieu selon la revendication 10 ou 11, **caractérisé en ce que** le corps de base (71) est réalisé sous la forme d'un profilé tubulaire rectangulaire, le profilé tubulaire rectangulaire présentant un treillis interne (79).

12. Système d'entraînement d'essieu selon l'une des revendications 10 à 12, **caractérisé en ce que** le pont d'essieu (70) possède un dispositif de guidage (20) avec un mécanisme de Watt.

13. Système d'entraînement d'essieu selon la revendication 13, **caractérisé en ce que** le dispositif de guidage (20) possède deux éléments de maintien (21) disposés perpendiculairement au pont d'essieu (70), les éléments de maintien (21) pouvant être reliés au châssis de véhicule (100).

14. Système d'entraînement d'essieu selon la revendication 13 ou 14, **caractérisé en ce que** le dispositif de guidage (20) possède un profilé de renfort (29) qui est disposé perpendiculairement sur un côté supérieur du pont d'essieu (70), le profilé de renfort (29) possédant deux renforts transversaux (28).

15. Système d'entraînement d'essieu selon la revendication 15, **caractérisé en ce que** les renforts transversaux (28) possèdent un élément de raccordement (26), l'élément de raccordement (26) étant disposé sensiblement perpendiculairement à l'arbre d'entraînement (2).
